# EUROPÄISCHE PATENTANMELDUNG

(11) **EP 1 898 332 A1**
(43) Veröffentlichungstag der Anmeldung: **12.03.2008**
(21) Anmeldenummer: 07017385.1
(22) Anmeldetag: 05.09.2007
(51) Int. Cl.: G06F 21/00, H04N 5/44

(54) **Fernsteuerung**

(30) Priorität: 07.09.2006 DE 102006042014
(71) Anmelder: fm marketing gmbh, 5162 Obertrum am See (AT)
(72) Erfinder: Maier, Ferdinand, 5162 Obertrum am See (AT)
(74) Vertreter: von Bülow, Tam

(57) **Zusammenfassung**

Die personalisierbare Fernsteuerung zur Steuerung von interaktiven multimedialen Geräten, insbesondere einer Set-Top-Box weist eine erste Hardwareeinrichtung, insbesondere einen Fingerabdruckleser (15) auf, mit dem authorisierte Personen eindeutig identifizierbar sind. Weiter weist die Fernsteuerung eine zweite Hardwareeinrichtung, vorzugsweise ein Lesegerät für eine SIM-Karte (20) auf, zur eindeutigen Identifizierung der Fernsteuerung. Damit ist sichergestellt, daß nur authorisierte Fernsteuerungen mit der Set-Top-Box kommunizieren und diese steuern können und weiter, daß Neueingabe oder Änderungen von Benutzerdaten authorisierter Personen nur mit der zweiten Einrichtung, insbesondere der SIM-Karte (16) vorgenommen werden können.

## Beschreibung

Die Erfindung betrifft eine personalisierbare Fernsteuerung und eine Kombination einer solchen Fernsteuerung mit einer Set-Top-Box für den Betrieb von Multimedia-Heimelektronik. Eine solche Fernsteuerung ist aus der WO 02/17627 A2 bekannt.

Dort ist eine Fernsteuerung für eine Set-Top-Box beschrieben, die für den jeweiligen Benutzer personalisiert werden kann, was durch physikalische Eigenschaften des jeweiligen Benutzers erfolgen kann, wie z.B. einen Fingerabdruckleser, einen Stimmerkennungsschaltkreis, eine Iris-Abtasteinrichtung, eine "Schnüffeleinrichtung", eine Gesichtserkennungseinrichtung. Als Alternative zur Personalisierung kann der jeweilige Benutzer auch aufgefordert werden, ein Passwort, eine bestimmte Tastenfolge oder ähnliches einzugeben. Damit kann beispielsweise innerhalb einer Familie oder eines Haushaltes mit einer einzigen Fernsteuerung eine Set-Top-Box und sonstige Heimunterhaltungsgeräte, wie Videorecorder, CD-Player, DVD-Player usw. gesteuert werden.

Eine Personalisierung einer Fernsteuerung in Verbindung mit einer Set-Top-Box hat eine Vielzahl von Vorteilen:
- Die Set-Top-Box kann im Sinne einer Kindersicherung programmiert werden, daß nur ausgewählte Fernsehkanäle gesehen oder andere Fernsehkanäle gesperrt sind;
- die Set-Top-Box kann so programmiert werden, daß je nach Benutzer dessen Fernsehgewohnheiten, insbesondere bevorzugte Fernsehkanäle zu vorprogrammierten Gruppen zusammengefaßt sind, z.B. Sportkanäle, Unterhaltungskanäle, Bildungskanäle etc.;
- je nach Benutzer können bestimmte Zeiten festgelegt werden, in denen der jeweilige Benutzer bestimmte Geräte benutzen darf;
- je nach Benutzer kann die Tastenbelegung der einzelnen Tasten der Fernsteuerung verändert werden, wodurch auch die Zahl möglichen Tasten reduziert werden kann;
- bei interaktiven Systemen, wie interaktivem Fernsehen, Home-Shopping, Home-Banking, Video-on-demand oder ähnlichem kann der Benutzer identifiziert werden, wobei auch hier in der Set-Top-Box zusätzliche Sicherungen eingebaut werden können, beispielsweise Grenzsummen für Bestellungen von Waren oder Filmen, Arten von Filmen (z.B. jugendfrei) etc.

Bei der in der WO 02/17627 A2 beschriebenen Fernsteuerung wird der Benutzer beispielsweise über den Fingerabdruckleser einmal identifiziert. Die Fernsteuerung bleibt dann solange auf diesen Benutzer personalisiert, bis er sich wieder durch Drücken einer bestimmten Taste abmeldet. Wird dies vergessen, so kann ein anderer Benutzer mit der vollen Zugangsberechtigung des vorhergehenden Benutzers dessen Funktionen ausüben. Als Abhilfe kann vorgesehen sein, daß die Personalisierung und damit die meisten Funktionen der Fernsteuerung automatisch abgeschaltet werden, wenn für eine vorgegebene Zeitdauer keine Taste der Fernbedienung betätigt wurde oder wenn die Set-Top-Box oder ein Fernsehgerät abgeschaltet wurden. Auch kann vorgesehen sein, daß jeglicher Tastendruck nur dann ausgeführt wird, wenn gleichzeitig auch der Fingerabdruckleser eine Person identifiziert hat. Als weitere Möglichkeit kann auch vorgesehen werden, daß alle oder zumindest mehrer Tasten der Fernsteuerung mit einem Fingerabdruckleser ausgestattet sind.

Problematisch bei dieser bekannten Fernsteuerung ist es aber auch, wie die Fernsteuerung anfänglich für den jeweiligen Benutzer programmiert wird, also der individuelle Benutzer erstmalig identifiziert wird. Meldet sich ein bisher noch nicht identifizierter neuer Benutzer an, beispielsweise durch Drücken seines Daumens auf den Fingerabdruckleser, so bietet die bekannte Fernsteuerung ein Menü zum Anlegen eines neuen Benutzers an, der sich dann alle Zugriffsrechte reservieren kann; die dann in der Fernsteuerung und/oder der Set-Top-Box gespeichert werden.

Ein weiteres Problem besteht darin, daß eine einmal programmierte Fernsteuerung der bisher geschilderten Art ohne weiteres dazu verwendet werden kann, auch "fremde" Set-Top-Boxen zu bedienen, zumindest wenn diese baugleich mit der "eigenen" Set-Top-Box sind oder, was häufig der Fall ist, mit derselben Signalcodierung arbeiten. Damit ist es möglich, an einem Anschluß einer fremden Set-Top-Bok Funktionen auszuführen, wie z.B. auch Internet-Banking, Warenbestellung etc.

Die WO 02/084991 A2 beschreibt ebenfalls eine für den jeweiligen Benutzer personalisierte Fernsteuerung für ein interaktives TV-System. Primär geht es dort um eine auf den jeweiligen Benutzer programmierte Tastenbelegung, um die Zahl der Tasten zu verringern. Zusätzliche Funktionen, wie z.B. "Garagentor öffnen", können implementiert werden. Für mehrere Benutzer kann eine Tabelle gespeichert werden, in welcher die Zuordnung einzelner Tasten zu vorgegebene Funktionen benutzerspezifisch festgelegt werden kann. Durch Drücken einer bestimmten Taste kann ein Menü aufgerufen werden, in dem alle Benutzer angezeigt und ausgewählt werden können. Irgendwelche Sicherungsmaßnahmen, um zu verhindern, daß sich jemand unter einem ihm nicht zugewiesenen Benutzernamen anmeldet, sind dort nicht vorgesehen.

Die US 5,861,881 beschreibt ein interaktives Computersystem zum Multimedia-Betrieb, bei dem ein Benutzerprofil gespeichert werden kann. Dies kann sowohl in einem lokalen Computer oder einem Hostcomputer eines Netzwerkes erfolgen. Dieses Computersystem kann auch beispielsweise über Kabel an Fernsehsender angeschlossen sein. Über dieses angelegte Benutzerprofil können bestimmte Inhalte von Daten oder Video selektiert werden:

Die US 5,715,020 beschreibt eine Fernsteuerung, die eine Vielzahl von Geräten steuern kann. Jede Fernsteuerung hat einen sie eindeutig identifizierenden Code. Eine zentrale Steuereinheit für mehrere Fernsteuerungen kann damit die individuelle Fernsteuerung identifizieren und ihr bestimmte fernzusteuernde Geräte zuweisen.

Aufgabe der Erfindung ist es, die Fernsteuerung der eingangs genannten Art dahingehend zu verbessern, daß ein hohes Maß an Zugangssicherheit gewährleistet ist. Dies bedeutet einerseits, daß nicht authorisierte Personen die Fernsteuerung nicht bedienen oder gar umprogrammieren können und andererseits auch, daß ein mit der Fernsteuerung zu bedienendes Gerät, wie z.B. eine Set-Top-Box, nur mit einer authorisierten Fernsteuerung betätigt werden kann, nicht jedoch mit einer nicht-authorisierten Fernsteuerung.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, durch eine auswechselbare hardwaremäßige Maßnahme die Fernsteuerung gegenüber dem zu steuernden Gerät, wie z.B. einer Set-Top-Box, zu identifizieren und zusätzlich durch eine weitere hardwaremäßige Maßnahme zugelassene Personen gegenüber der Fernsteuerung zu identifizieren. Die erste hardwaremäßige Maßnahme ist mindestens eine SIM-Karte in der Fernsteuerung. Zusätzlich kann auch in dem zu steuernden Gerät eine weitere SIM-Karte vorgesehen sein. Die zweite hardwaremäßige Maßnahme ist eine Einrichtung, die eine Person identifizieren kann und insbesondere ein Gerät zum Lesen und Erkennen eines menschlichen Fingerabdruckes. Eine wirksame Fernsteuerung oder Fernbedienung ist nur dann möglich, wenn beide hardwaremäßigen Maßnahmen kumulativ eine Zugangsberechtigung freigeben. Mit anderen Worten kann nur eine mit der entsprechenden SIM-Karte ausgestattete Fernsteuerung überhaupt eine Kommunikationsverbindung mit der Set-Top-Box aufnehmen und dies aber auch nur, wenn der Fingerabdruckleser eine authorisierte Person erkannt hat.

Auch ist vorgesehen, daß eine Programmierung eines weiteren Benutzers mit Einlesen dessen Fingerabdruckes nur dann möglich ist, wenn die entsprechende SIM-Karte vorhanden ist.

Die Geräteidentifizierung kann dergestalt abgewickelt werden, daß sie erstmalig nur mit eingesetzter SIM-Karte möglich ist. Für weitere Zugänge können die entsprechenden Zugangsdaten der SIM-Karte in einem Speicher der Fernsteuerung gespeichert werden, so daß bei späteren Zugängen die SIM-Karte nicht benötigt wird, sondern nur noch die Identifizierung authorisierter Benutzer über den Fingerabdruckleser.

Nachträgliche Änderungen der Zugangsberechtigungen von authorisierten Benutzern oder die Neuaufnahme weiterer authorisierter Benutzer sind nur mit eingesetzter SIM-Karte möglich.

SIM-Karten (Subscriber Identity Module) sind üblicherweise Chipkarten, die in einm Mobiltelefon eingesteckt werden und zur Identifikation des Nutzers im Netz dienen. Sie haben sich millionenfach bewährt, sind kostengünstig zu erhalten und gelten nach wie vor als extrem sicheres und zuverlässiges Verschlüsselungsmittel. Darüber hinaus haben SIM-Karten auch den Vorteil, daß Daten auf ihr gespeichert werden können und damit Voreinstellungen auch auf andere Geräte übertragen werden können, beispielsweise wenn ein Gerät defekt ist.

Als weitere Maßnahme zur Erhöhung der Sicherheit kann vorgesehen sein, daß der oder die Identifikatiönscode/s zwischen Fernsteuerung und Set-Top-Box bei jeder Betätigung im Sinne einer Codefortschaltung, wie sie in der DE 35 18 827 beschrieben ist, verändert wird. Der Offenbarungsinhalt dieser Schrift wird hiermit durch Bezugnahme eingeschlossen. Damit ist es auch nicht mehr möglich, beispielsweise durch ein Lesegerät alle Codes einer Fernsteuerung auszulesen und auf eine andere Fernsteuerung zu übertragen. Solche Lesegeräte bzw. lernende Fernsteuerungen sind heute als Ersatz für defekte Fernsteuerungen im Handel erhältlich und beispielsweise in den US-Patenten 4,626,848 und 4,623,887 beschrieben.

Nach einer Weiterbildung der Erfindung hat die Fernsteuerung auch zusätzliche Kommunikationsmöglichkeiten, wie ein Mikrofon, eine Kamera und/oder einen USB-Anschluß zur akustischen und visuellen Kommunikation der Teilnehmer innerhalb eines Netzes sowie zum Datenaustausch.

Generell sei noch angemerkt, daß der Begriff "Fernsteuerung" im Sinne der vorliegenden Beschreibung nicht nur die herkömmlichen Fernsteuerungen für Heimelektronik, wie Fernsehgeräte, Videorecorder, Set-Top-Boxen etc. beinhaltet, sondern auch Geräte mit erweiterten Funktionen, wie z.B. einer alphanumerischen Tastatur (sog. Keyboards) und sonstige Eingabe-/Ausgabegeräte zur meist drahtlosen Übermittlung von Signalen an andere Geräte mit der Einschränkung, daß diese gesteuert werden. Hierbei findet im Sinne der vorliegenden Erfindung primär eine bidirektionale Kommunikation zwischen der Fernsteuerung und dem ferngesteuerten Gerät statt, wobei allerdings auch eine bidirektionale Kommunikation zwischen dem gesteuerten Gerät, wie z.B. einer Set-Top-Box, und einer entfernten Station, wie z.B. einem Provider, stattfindet. Somit kann die Fernsteuerung auch weitere Komponenten enthalten, wie z.B. eine Computermaus, einen sog. Joystick, einen sog. Trackball, ein sog. Touchpad oder einen sog. Touch Screen, wobei all diese letzt genannten Geräte im weitesten Sinne Eingabegeräte sind, die Steuercodes für ein zu steuerndes Gerät erzeugen.

Im folgenden wird die Erfindung anhand eines Ausführungsbeispieles im Zusammenhang mit der Zeichnung ausführlicher erläutert. Es zeigt:
- Fig. 1: ein Prinzipschaltbild eines Multimedianetzes mit einer Fernsteuerung nach der Erfindung;
- Fig. 2: ein detailierteres Prinzipschaltbild einer Fernsteuerung zur Ansteuerung einer Set-Top-Box nach einem Ausführungsbeispiel der Erfindung.

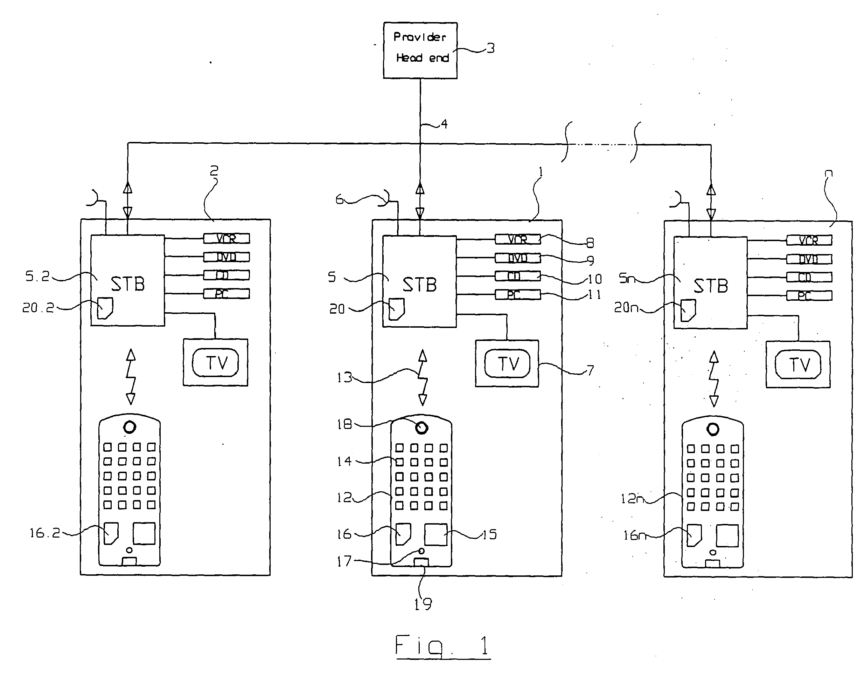

Das in Fig. 1 dargestellte Netzwerk hat mehrere Stationen 1, 2 bis n, die mit einer entfernt gelegenen Basisstation 3 verbunden sind. Hierbei kann es sich beispielsweise um einen Fernsehsender, einen Internet-Serviceprovider oder sonstigen Lieferanten (Provider) handeln, der für den Multimediabereich geeignete Informationen übermittelt, was bei den moderneren Geräten über einen Rückkanal 4 erfolgt, der beispielsweise eine Telefonleitung, eine DSL-Verbindung, eine Funkverbindung, wie z.B. UMTS, sein kann, der mit einer sog. Set-Top-Box 5 verbunden ist, die im Regelfall auch über zusätzliche Eingänge verfügt, wie z.B. eine Eingang für eine Antenne 6.

Die Funktionen der Set-Top-Boxen werden laufend erweitert mit dem Ziel, ein universelles Multimedia-Kommunikations-und Informationszentrum aufzubauen.

Im Regelfall ist an eine Set-Top-Box 5 mindestens ein Fernsehempfänger 7 angeschlossen, der im wesentlichen nur noch die Funktion eines Monitors hat zur visuellen Anzeige der von der Set-Top-Box übermittelten Informationen. Die meisten Informationen, wie Kanalwahl, Lautstärke etc. werden über die Set-Top-Box 5 gesteuert. Zusätzlich können weitere Peripheriegeräte, wie z.B. ein Videorecorder 8, ein DVD-Abspielgerät 9, ein CD-Abspielgerät 10 oder auch ein Personalcomputer 11 an die Set-Top-Box 5 oder das Fernsehgerät 7 angeschlossen sein.

Alle Funktionen der Set-Top-Box sowie meistens auch alle weiteren Funktionen der an diese angeschlossenen Geräte 7 bis 11 werden über eine Fernsteuerung 12 gesteuert, die im Regelfall über eine drahtlose Verbindungsstrecke 13, wie z.B. eine Infrarotverbindung, eine Funkverbindung, mit der Set-Top-Box 5 kommuniziert. Hier sind alle gängigen Verfahren der drahtlosen Informationsübertragung möglich, wie z.B. nach dem Bluetooth-Protokoll. Selbstverständlich ist auch eine drahtgebundene Verbindung über ein elektrisches Kabel im Bereich des möglichen.

Die Fernsteuerung 12 hat üblicherweise eine Tastatur 14 mit einer Vielzahl von Tasten, bei deren Betätigung vorbestimmte Signale an die Set-Top-Box 5 oder deren Peripheriegeräte 7 bis 11 übermittelt werden. Die den einzelnen Tasten 14 zugewiesenen Funktionen sind programmierbar und zwar derart, daß für unterschiedliche Benutzer den einzelnen Tasten unterschiedliche Funktionen zugewiesen werden können, so daß die Fernsteuerung 12 "personalisierbar" ist. Im eingangs abgehandelten Stand der Technik sind vielfältige Möglichkeiten beschrieben, wie diese Personalisierung vorgenommen werden kann. Dem Fachmann sind daraus und aus weiterem Stand der Technik vielfältige Möglichkeiten der hardware- und softwaremäßigen Realisierung bekannt, so daß Details hier nicht erläutert werden müssen.

Eine bei der vorliegenden Erfindung bevorzugte Einrichtung für diese Personalisierung ist ein in die Fernsteuerung 12 integriertes Fingerabdruck-Lesegerät 15. Solche Fingerabdruck-Lesegeräte sind im Handel erhältlich und werden auf verschiedenen Gebieten mit Erfolg eingesetzt, beispielsweise bei Personal Computern, Zugangskontrollen zu geschützten Räumen etc. Die wesentliche Funktion des Fingerabdruck-Lesegerätes 15 besteht darin, den Fingerabdruck, beispielsweise des Daumens eines Benutzers, zu lesen, daraus bestimmte Identifikationsmerkmale zu ermitteln und in Identifikationsdaten umzuwandeln, die mit zuvor gespeicherten Identifikationsdaten verglichen werden. Bei einem vorgegebenen Maß der Übereinstimmung der aktuell gelesenen und der gespeicherten Identifikationsdaten kann damit ein Benutzer identifiziert werden. Nach einer solchen Identifikation können diverse Funktionen der Fernsteuerung 12 aufgerufen werden, wie z.B. Tastenbelegung der Funktionen der einzelnen Tasten 14, Sperren oder Zugangsberchtigungen zu bestimmten Funktionen oder Programmen der Set-Top-Box 5. Auch kann über diese Personalisierung die Sendefunktion der Fernsteuerung 12 aktiviert werden.

Bei der bisher beschriebenen Konfiguration treten jedoch einige Probleme auf, die mit der vorliegenden Erfindung gelöst werden.

Bei den bekannten Fernsteuerungen erfolgt das Einlesen eines neuen Benutzers oder auch das Ändern der Zugangsberechtigung und des Nutzerprofiles eines bereits erfaßten Benutzers lediglich durch Aufrufen eines vorgegebenen Menüpunktes, was durch Drücken einer Taste möglich ist. Eine Sicherung gegen Anlegen eines neuen Benutzers oder Änderungen bei einem schon authorisierten Benutzer ist allenfalls dadurch gegeben, daß zum Aufrufen dieser Funktionen ein Passwort eingegeben werden muß, das üblicherweise aus einer vierstelligen Ziffernfolge besteht. Dieses Passwort wird gerade innerhalb eines Haushaltes oder einer Familie nur schwer geheimzuhalten sein und ist mit einigem Geschick und entsprechendem Zeitaufwand auch leicht zu "knacken", so daß gerade die Jugendschutzfunktion unzureichend ist. Besonders Jugendliche werden daher versuchen, diesen Schutz zu überwinden. Ein weiteres Problem besteht darin, daß die Set-Top-Box einer Station, z.B. der Station 1, auch mit anderen Fernsteuerungen gesteuert werden kann, also beispielsweise mit der Fernsteuerung 12n der Station n oder die Set-Top-Box 5n der Station n durch die Fernsteuerung 12 der Station 1. Dies ist zumindest problemlos möglich, wenn eine Fernsteuerung für denselben Typ von Set-Top-Box zur Verfügung steht.

Auch sind heute im Handel viele programmierbare Fernsteuerungen erhältlich, die an praktisch alle im Handel erhältlichen Set-Top-Boxen anpaßbar sind, so daß es kein Problem darstellt, eine mit Fingerabdruckleser geschützte Fernsteuerung durch eine andere zu ersetzen und sich damit Zugang zu allen Funktionen einer Set-Top-Box zu verschaffen bis hin zu kostenpflichtigen Sendungen, Bestellung von Waren oder gar Internet-Banking. Die jeweilige Set-Top-Box wird gegenüber dem Provider 3 im Regelfall durch den Rückkanal 4 identifiziert oder durch sonstige bekannte Sicherungsmaßnahmen in der Set-Top-Box, während die Übertragungsstrecke 13 weitestgehend ungeschützt ist.

Zur Lösung dieser Probleme hat die Fernsteuerung 12 nach der Erfindung eine zusätzliche hardwaremäßige Maßnahme, die die vorzugsweise durch eine SIM-Karte 16 realisiert ist. Jede Fernsteuerung hat eine individuelle SIM-Karte, der alternativ oder kumulativ verschiedene Funktionen zugewiesen werden können, wie z.B.
- Über den Code der SIM-Karte identifiziert sich die jeweilige Fernsteuerung 12 gegenüber der zugeordneten Set-Top-Box 5. Die Set-Top-Box kann dabei so programmiert sein, daß sie ausschließlich Befehle von einer Fernsteuerung akzeptiert, die eine individuelle SIM-Karte 16 enthält.
- Die Fernsteuerung 12 ist so ausgebildet, daß sie nur dann auf Tastendruck Steuerungsbefehle aussendet, wenn die SIM-Karte 16 eingesetzt ist.
- Die Fernsteuerung 12 ist so ausgebildet, daß Eingabe neuer Benutzer oder Änderungen von Benutzerprofilen im Zusammenhang mit dem Fingerabdruckleser 15 nur dann möglich sind, wenn die SIM-Karte 16 eingesetzt ist. Dabei kann auch vorgesehen sein, daß ein Identifizierungscode der SIM-Karte 16 in der Fernsteuerung 12 gespeichert wird, so daß sich nach dieser Speicherung die Fernsteuerung 12 auch ohne eingesetzte SIM-Karte 16 gegenüber der Set-Top-Box 5 identifizieren kann. Mit anderen Worten kann nach Eingabe eines oder mehrerer Benutzer(s) die SIM-Karte 16 entnommen und an einem sicheren Ort aufbewahrt werden und trotzdem sind alle oben definierten Sicherheitsanforderungen erfüllt, da sich weder eine "fremde" Fernsteuerung mit der Set-Top-Box verbinden kann, noch bei der "eigenen" Fernsteuerung Änderungen der Benutzer oder Benutzerprofile möglich sind.

Die jeweilige Fernsteuerung 12 identifiziert sich also im Zusammenhang mit der SIM-Karte 16 gegenüber einer einzigen zugeordneten Set-Top-Box 5, während sich der individuelle Benutzer über den Fingerabdruckleser 15 identifiziert.

Um die Initialisierungsphase, d.h. die erste Verbindungsaufnahme zwischen Fernsteuerung 12 und Set-Top-Box 5 einerseits flexibel und andererseits doch sicher zu gestalten, kann vorgesehen sein, daß auch die Set-Top-Box eine Leseeinrichtung 20 für eine SIM-Karte aufweist. Bei der Initialisierung kann die SIM-Karte 16 in die Leseeinrichtung 20 eingesetzt werden und damit der Identifizierungscode in der Set-Top-Box 5 gespeichert werden. Anschließend kann dieselbe SIM-Karte 16 aus der Leseeinrichtung 20 entnommen und in die Fernsteuerung 12 eingesetzt werden, um deren Programmierung bzw. Personalisierung vorzunehmen. Selbstverständlich ist es auch möglich, zwei aufeinander abgestimmte SIM-Karten zu verwenden, nämlich eine für die Leseeinrichtung 20 der Set-Top-Box 5 und die andere für die Fernsteuerung 12.

Weiter karin vorgesehen sein, daß manche Funktionen, die eine erhöhte Sicherheit verlangen, wie z.B. kostenpflichtige Bestellung von Waren oder Dienstleistungen, Zugang zu Bankkonten etc., nur dann möglich sind, wenn die SIM-Karte 16 in die Fernsteuerung 12 eingesetzt ist.

Zur Erweiterung der Funktionen der Fernsteuerung kann diese zusätzlich ein Mikrophon 17 enthalten, mit dem sprachgesteuerte Befehle an die Set-Top-Box übermittelt werden und über das auch eine akustische Kommunikation nach Art einer Telefonie über die Set-Top-Box und den Rückkanal 4 möglich ist. Die Tonwiedergabe kann dann über Lautsprecher des Fernsehgerätes erfolgen. Zusätzlich wäre es auch möglich, in Verbindung mit dem Mikrophon 17 eine Stimmerkennung des individuellen Benutzers durchzuführen.

Weiter hat die Fernsteuerung 12 eine Videokamera 18 mittels der Bilder aufgenommen, um sie über die Set-Top-Box an andere Set-Top-Boxen zu übermitteln, wo die Bilder auf dem Fernsehgerät dargestellt werden.

Schließlich hat die Fernsteuerung 12 auch noch eine USB-Schnittstelle 19 zur Ankopplung an einen Personal Computer oder zur Ankopplung weiterer Peripheriegeräte, wie z.B. einer Spielkonsole oder ähnlichem. Über diese USB-Schnittstelle 19 kann die Fernsteuerung 12 auch von einem PC aus programmiert werden, wobei auch hier alle sicherheitsrelevanten Funktionen durch die SIM-Karte 16 erhalten bleiben.

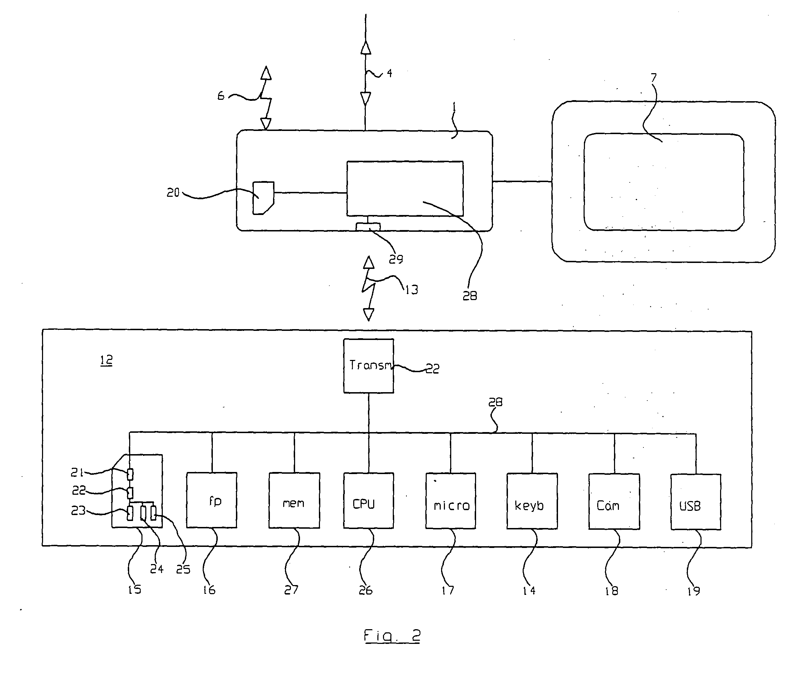

Fig. 2 zeigt ein Prinzipschaltbild der Fernsteuerung 12 und einer Set-Top-Box 5, wobei nur die wesentlichen Funktionselemente dargestellt sind. Die Fernsteuerung 12 enthält die SIM-Karte 15 bzw. genauer gesagt eine Aufnahme für eine SIM-Karte mit den üblichen Kontakten. Diese SIM-Karte selbst hat eine Eingabe-/Ausgabeeinheit 21, einen Prozessor 22, einen Nur-Lese-Speicher 23 (ROM), einen Speicher mit wahlfreiem Zugriff 24 (RAM) und einen weiteren Speicher 25 in Form eines EEPROM. Weiter enthält sie den Fingerabdruckleser 16, das Mikrophon 17, die Videokamera 18, die USB-Schnittstelle 19 und die Tastatur 14, wobei all diese genannten Elemente beispielsweise über eine BUS-Leitung 28 mit einem Prozessor 26 verbunden sind. Weiter enthält die Fernsteuerung einen weiteren Speicher 27 und schließlich eine Sende-/Empfangseinheit 22, die drahtlos Signale über die Strecke 13 aussendet und empfängt.

Der Speicher 27 enthält einerseits das Betriebssystem sowie alle notwendigen Daten, wie z.B. Zuordnungstabellen, Benutzerkennung, gespeicherte Daten des Fingerabdrucklesers 16, Nutzerprofile etc., bis hin auch zu den Identifikationsdaten der SIM-Karte 15, sofern dies gemäß dem oben geschilderten Ausführungsbeispiel implementiert ist.

Auch die SIM-Karte 16 kann diverse Daten speichern. So ist beispielsweise im ROM 23 deren Betriebssystem abgelegt. Im RAM 24 sind die gerade benötigten flüchtigen Daten abgelegt, während im EEPROM 25 Benutzerdaten abgelegt werden. Das EEPROM 25 kann ein Spiegelbild eines Teiles des Speichers 27 sein, um bestimmte Benutzerdaten auf eine andere Fernsteuerung übertragen zu können.

Die Set-Top-Box 1 hat in analoger Weise bei diesem Ausführungsbeispiel ebenfalls ein Lesegerät 20 für eine SIM-Karte, das an die sonstige Elektronik 28 angeschlossen ist. Diese hat selbstverständlich in an sich bekannter Weise ebenfalls eine Zentraleinheit, mindestens einen Speicher und diverse Schnittstellen.zu Peripheriegeräten, wie z.B. dem Fernsehempfänger 7 sowie auch zu einer Sende-/Empfangseinheit 29, die über die Strecke 13 mit der Sende-/Empfangseinheit 22 bidirektional Daten austauschen kann.

Selbstverständlich können die Set-Top-Box und/oder die Fernsteuerung so ausgestaltet und insbesondere so programmiert sein, daß alle üblichen Funktionen und auch die Funktionserweiterungen von Heimnetzwerken implementiert sind.

## Patentansprüche

1. Personalisierbare Fernsteuerung zur Steuerung von interaktiven multimedialen Geräten, mit einer ersten Hardwareeinrichtung zum Erkennen von Personen, **gekennzeichnet durch** eine zweite auswechselbare Hardwareeinrichtung (16) zum eindeutigen Identifizieren der Fernsteuerung (12).

2. Fernsteuerung nach Anspruch 1, **dadurch gekennzeichnet, daß** die zweite Hardwareeinrichtung eine SIM-Karte (16) ist.

3. Fernsteuerung nach Anspruch 1 oder 2, **dadurch gekennzeichnet,**
**daß** die erste Hardwareeinrichtung (15) und die zweite Hardwareeinrichtung (16) derart miteinander verknüpft sind, daß Neueingabe und/oder Änderungen in Bezug auf die erste Hardwareeinrichtung nur bei Anwesenheit der auswechselbaren zweiten Hardwareeinrichtung (16) möglich sind.

4. Kombination aus personalisierter Fernsteuerung und interaktivem multimedialem Gerät, **dadurch gekennzeichnet,**
**daß** ein Datenaustausch zwischen der Fernsteuerung und dem Gerät nur dann möglich ist, wenn die Fernsteuerung sich aufgrund einer Hardwareeinrichtung (16) zum eindeutigen Identifizieren der Fernsteuerung (12) gegenüber dem Gerät (5) identifiziert hat.

5. Kombination nach Anspruch 4, **dadurch gekennzeichnet, daß** die Fernsteuerung (12) und das Gerät (5) jeweils eine Einrichtung (16, 20) zum Lesen von eindeutigen Identifizierungsdaten in Form einer SIM-Karte aufweisen.
